# EUROPÄISCHE PATENTSCHRIFT

(11) **EP 0 402 623 B1**
(45) Veröffentlichungstag und Bekanntmachung des Hinweises auf die Patenterteilung: **15.12.1993**
(21) Anmeldenummer: 90108746.0
(22) Anmeldetag: 09.05.1990
(51) Int. Cl.: F04B 1/12, F16B 11/00

(54) **Kolben für Axialkolbenmaschinen**
Piston for axial piston machines
Piston pour machines à piston axial

(30) Priorität: 13.06.1989 DE 3919329
(43) Veröffentlichungstag der Anmeldung: 19.12.1990
(73) Patentinhaber: Hydromatik GmbH, 89275 Elchingen (DE)
(72) Erfinder: Adler, Bernhard, Dipl.-Ing., D-7915 Thalfingen (DE)
(74) Vertreter: Körber, Wolfhart, Dr.rer.nat.

(56) Entgegenhaltungen:
- EP-A- 0 259 010
- DE-A- 3 204 264
- DE-C- 3 804 424
- DE-U- 7 108 800
- FR-A- 2 183 347

## Beschreibung

Die Erfindung bezieht sich auf einen Kolben nach dem Oberbegriff des Anspruchs 1.

Ein solcher, allgemein mit Leichtkolben bezeichneter Kolben ist in dem DE-GM 71 08 800 beschrieben und dargestellt. Bei dieser bekannten Ausgestaltung ist das Füllstück durch eine Einbördelung eines das freie Ende des Füllstücks überragenden Abschnitts der Wand des Hohlkörpers gegen die Stirnfläche des Füllstücks gebildet. Die hierdurch erreichte Festigkeit der axialen Halterung des Füllstücks zwischen dem Grund des Hohlraums und der Einbördelung ist unzureichend, weil zum einen die Einbördelung nach dem Einbördeln etwas zurückfedert, und zum anderen die Einbördelung aufgrund des Vorhandenseins einer sich beim Einbördeln einstellenden verhältnismäßig langen Krümmung die Einbördelung einem verhältnismäßig langen Hebelarm gleicht, dessen axiale Spannkraft verhältnismäßig gering ist. Infolgedessen ist das angestrebte Ziel, das Füllstück mit einer gewissen, von der Einbördelung ausgeübten Spannung gegen den Grund des Hohlraums vorzuspannen, nicht erreichbar.

Gemäß nicht vorveröffentlichter DE-C 38 04 424 hat die Anmelderin bereits vorgeschlagen, das Füllstück im Hohlkörper durch zusätzliche Eindrückungen zu sichern, die im mittleren Längsbereich des Kolbens angeordnet sind und durch Eindrücken der Wand des Hohlkörpers in darunter befindliche Ausnehmungen im Füllstück gebildet sind. Zusätzlich ist am freien Ende des Kolbens ein das Füllstück axial überragender Abschnitt der Wand des Hohlkörpers gegen die Stirnseite des Füllstücks eingerollt, wodurch hauptsächlich die Stirnwand des aus leichterem und in der Regel weicherem Material vor Kavitation geschützt werden soll. Bei dieser bekannten Ausgestaltung ergibt sich Zwar eine stabile Halterung des Füllstücks im Hohlkörper, jedoch besteht die Gefahr, daß insbesondere bei einer verhältnismäßig dünnen Hohlraumwand der Kolben zu Spannungsrissen und zum Bruch im Bereich der Eindrückungen neigt.

In der EP-A-0259010 ist ein Kolben für einen Stoßdämpfer beschrieben, dessen hohler Kolbenschaft aus zwei hülsenförmigen Längsabschnitten besteht, die muffenförmig ineinandergesteckt sind und durch eine am Umfang des äußeren vom Kolben ausgehenden Längsabschnitts eingebrachte Einrollung, die sich bis in den inneren Längsabschnitt hinein erstreckt, miteinander verbunden sind. Ein Füllstück ist bei diesem bekannten Kolben nicht vorgesehen. Im übrigen haften dieser bekannten Ausgestaltung die bezüglich DE-C 38 04 424 vorbeschriebenen Merkmale an.

Der Erfindung liegt die Aufgabe zugrunde, einen Kolben der eingangs angegebenen Art so auszugestalten, daß bei Gewährleistung einer einfachen und kostengünstigen Herstellung eine stabile Halterung des Füllstücks sowie stabile Ausgestaltung des Schaftes des Kolbens erreicht wird.

Diese Aufgabe wird durch die kennzeichnenden Merkmale des Anspruchs 1 gelöst.

Bei der erfindungsgemäßen Ausgestaltung weist der Umschlag im Gegensatz zur bekannten Umbördelung einen konkav gerundeten Wandverlauf auf, wodurch der Umschlag aufgrund von Selbststützung eine verhältnismäßig große Eigenstabilität aufweist, so daß er eine verhältnismäßig große, gegen die Stirnfläche des Füllstücks wirksame Spannkraft aufzubringen vermag und somit das Füllstück ohne die Gefahr einer axialen Lockerung im Hohlraum des Hohlkörpers zu sichern vermag. Da bei der erfindungsgemäßen Ausgestaltung die durch den erfindungsgemäßen Umschlag vorgegebene Einschnürung des Querschnitts des Kolbens sich am freien Ende des Kolbenschafts befindet, ist die Gefahr von Spannungsrissen oder eines Bruchs des Kolbens ausgeschlossen.

Vorteilhafte Weiterbildungen der Erfindung, die zu einer stabilen Haltung bzw. Sicherung des Füllstücks im Kolben und zu einer leichten Ausführung des Kolbens bei Gewährleistung einer guten Funktion beitragen, sind in den Unteransprüchen beschrieben.

Nachfolgend wird die Erfindung anhand von in einer Zeichnung dargestellten Ausführungsbeispielen näher erläutert. Es zeigt
- Fig. 1: einen erfindungsgemäß ausgestalteten Kolben im Axialschnitt;
- Fig. 2: einen erfindungsgemäß ausgestalteten Kolben im Axialschnitt als zweites Ausführungsbeispiel;
- Fig. 3: den Faserverlauf bei einer Umbördelung am Kolben als Einzelheit in vergrößerter Darstellung;
- Fig. 4: den Faserverlauf bei einer Einrollung am Kolben in vergrößerter Darstellung.

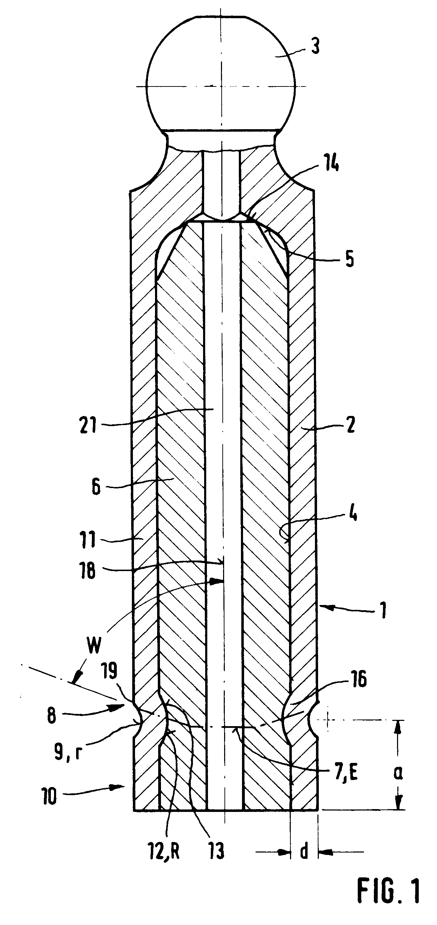

Die in den Figuren allgemein mit 1 bezeichneten Kolben bestehen jeweils aus einem Kolbenschaft 2 und einem kugelförmigen Kolbenkopf 3. Im Kolbenschaft 2 runden Querschnitts erstreckt sich von dessen freien Ende ein sacklochförmiger Hohlraum 4, dessen Grund mit 5 bezeichnet ist. Der Kolbenschaft 2 ist somit ein Hohlkörper. Im Hohlraum 4 ist ein Füllstück 6 eingesetzt, das den Hohlraum 4 gemäß Fig. 1 weitgehend ausfüllt, am Grund 5 des Holraums 4 anliegt und sich im wesentlichen bis zum mit 7 bezeichneten freien Ende des Kolbens 1 erstreckt. Das Füllstück 6 besteht aus einem Material mit einem gegenüber dem Material des Hohlkörpers 2 geringeren spezifischen Gewicht, wodurch erreicht wird, das Gewicht bzw. die Masse des Kolbens 1 wesentlich zu verringern. Beim Ausführungsbeispiel nach Fig. 1 besteht das Füllstück 6 aus einer Aluminiumlegierung.

Zur axialen Sicherung des möglichst spielfrei, z.B. durch Pressen oder mit einer nur geringen Toleranz in den im Querschnitt kreisrunden Hohlraum 4 eingesetzten, ebenfalls kreisrunden Füllstücks 6 ist ein mit 8 bezeichneter Umschlag vorgesehen, der durch eine Einrollung 9 der Wand 11 des Kolbenschaftes 2 gebildet ist.

Der Umschlag 8 befindet sich am freien Ende 7 des fertigen Kolbens 1, und er kann sich in eine Ausnehmung bzw. Ringnut 12 im Füllstück 6 erstrecken, oder sie kann auch in die Oberfläche des Füllstücks 6 unter Verformung zu einer Ringnut 12 eingerollt bzw. eingewalzt sein. In beiden Fällen ergibt sich bei einer gerundeten Einrollung 9 ein im Vergleich zum Krümmungsradius r der Einrollung 9 der Wanddicke d des Kolbenschaftes 2 entsprechende Vergrößerung des Krümmungsradius R der Ringnut 12.

Sofern eine Ringnut 12 von vorneherein vorgesehen ist, ist es vorteilhaft, die Ringnut 12 bezüglich der Einrollung 9 zum freien Ende 7 hin geringfügig zu versetzen, so daß die Einrollung 9 gegen die dem freien Ende 7 abgewandte Flanke 13 der Ringnut 12 drückt und dadurch das Füllstück 6 ggfs. auch unter Verformung der Flanke 13 mit seiner inneren Stirnseite 14 gegen den Grund 5 des Hohlraums 4 drückt und somit verspannt. Nach dem Anbringen der Einrollung 9, die sich in einem geringen Abstand a vom freien Ende 7.1 des vorgefertigten Kolbens 1 befindet, wird der Kolben 1 im Bereich der Einrollung 9 so abgelängt, daß ein dem freien Ende 7 abgewandter Teil 16 der Einrollung 9 am Kolben 1 verbleibt und die Halterungs- bzw. Sicherungsfunktion für das Füllstück 6 übernimmt.

Die Trennebene E bzw. das endgültige freie Ende 7 des Kolbens 1 erstreckt sich vorzugsweise etwa in der dem Kolbenkopf 3 abgewandten Hälfte der Einrollung 9. Dabei ist es vorteilhaft, die Stirnfläche am freien Ende 7 gerundet oder kegelstumpfförmig zu gestalten, wobei die Kegelfläche mit der Längsachse 18 des Kolbens 1 einen spitzen Winkel w einschließt und vorzugsweise an der inneren Ecke 19 der Einrollung 9 oder in einem geringen, nach außen gerichteten Abstand c davon am Umfang des Kolbenschaftes 2 ausläuft.

Beim vorliegenden Ausführungsbeispiel weist der Kolben 1 eine koaxial durchgehende Schmierbohrung 21 auf, die sich somit auch im Füllstück 6 erstreckt.

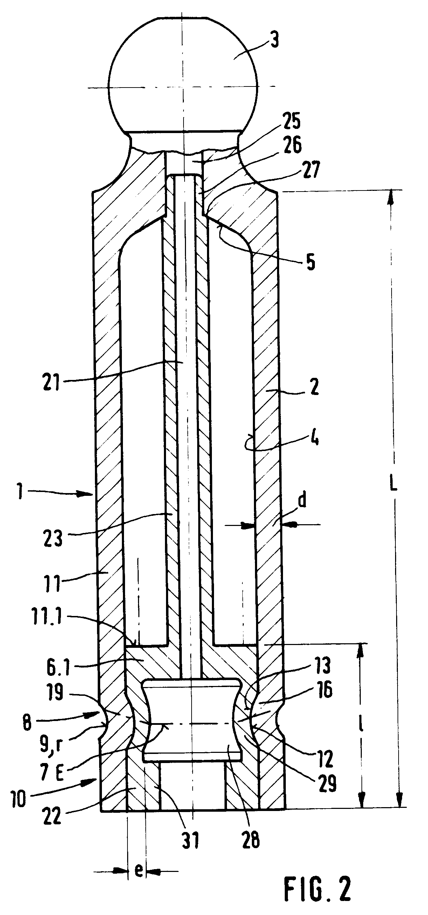

Beim Ausführungsbeispiel nach Fig. 2 wird anstelle eines Füllstücks ein Verschluß- bzw. Einsatzstück 6.1 verwendet, das am freien Ende 7 des Kolbens einen den Hohlraum 4 ausfüllenden Kopf 22 aufweist, von dem sich axial nach innen ein im Durchmesser deutlich verjüngter zylindrischer Hals 23 erstreckt, der mit seinem inneren Ende in den im Kolbenhals und im Kolbenkopf 3 sich erstreckenden Schmierbohrungsabschnitt-25 mit einem verjüngten Abschnitt 26 einfaßt, wobei eine durch die Verjüngung gebildete Schulter 27 im Bereich des freien Endes des Halses 23 am Grund 5 des Hohlraums 2 anliegt, wodurch das Einsatzstück 6.1 gegen eine Verschiebung nach innen gesichert ist. Die Länge l des Kopfes 22 beträgt nur einen Bruchteil der Länge L des Kolbenschaftes 2.

Außerdem weist der Kopf 22 des Einsatzstücks 6.1 im Bereich der Einrollung 9 eine Bohrungserweiterung 28 auf, die von einer hohlzylindrischen Wand 29 mit der Dicke e umgeben und aufgrund ihrer verhältnismäßig geringen Dicke e einbiegbar ist. Beim Anbringen der Einrollung 9 wird diese Wand 29 eingebogen, wie es in Fig. 2 dargestellt ist, und wodurch für den durch die Einrollung 9 gebildeten Umschlag 8 ein Hintergriff gebildet ist.

Es ist im Rahmen der Erfindung auch möglich, ein verhältnismäßig kurzes Einsatzstück 6.1 an einer in Fig. 2 angedeuteten Innenstufe 11.1 der Wand 11 anliegen zu lassen, wodurch der Hals 23 entfallen kann.

Beim vorliegenden Ausführungsbeispiel ist die Bohrungserweiterung 28 in der durch die Einrollung 9 gehende Trennebene E angeordnet, wobei am freien Ende der Kolbenschaftverlängerung 10 ein gegenüber der Wand 29 stufenförmig verdickter Wandabschnitt 31 vorhanden ist.

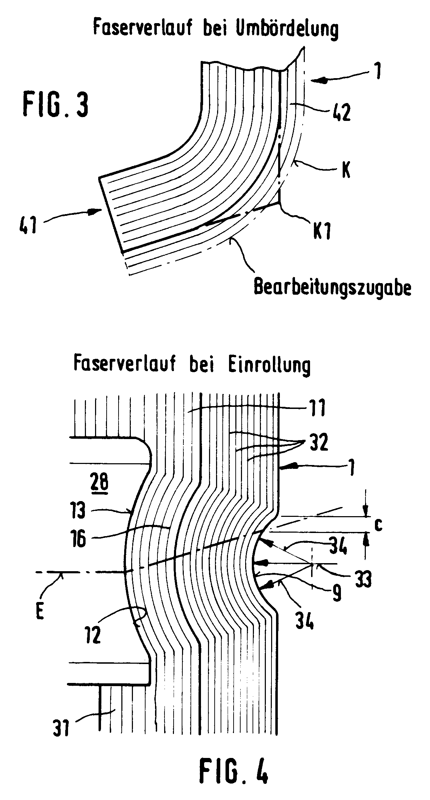

Wie Fig. 4 deutlich erkennen läßt, verläuft im Bereich der Einrollung 9 die Wand 11 des Kolbenschaftes 2 bzw. die dargestellten und mit 32 bezeichneten Materialfasern konkav, wobei beim Einrollen in Richtung der mit dem Pfeil 33 bezeichneten Einrollkraft divergierende Kraftkomponenten 34 ergeben, die das Material seitlich drücken bzw. quetschen. Dabei ist aufgrund der konkaven Formgebung und auch gegenseitiger Abstützung ein Zurückfedern der Flanken der Einrollung 9 weitgehend verhindert.

Wie aus Fig. 3 deutlich zu entnehmen ist, findet bei einer an sich bekannten Umbördelung 41 eine solche Abstützung gegen ein Zurückfedern nach dem Einbördeln nicht statt. Im Gegenteil, aufgrund der Krümmung K der Umbördelung 41 ergibt sich für diese ein verhältnismäßig langer Hebelarm, wodurch das Zurückfedern nach dem Umbördeln sogar erleichtert wird. Außerdem werden bei einer Umbördelung 41 bei der Nachbearbeitung des Kolbens 1 die kaltverfestigten Randfasern 42 einer Bearbeitungszugabe abgetragen, wenn der Kolben 1 auf die mit K1 bezeichnete Kolbenkontur abgetragen wird.

Bei der erfindungsgemäßen Ausgestaltung gemäß Fig. 4 werden dagegen im Bereich der Einrollung 9 die Materialfasern 43 durch die Stirnseite des Kolbens 1 bzw. Trennfläche quer durchtrennt, so daß die Vorspannung erhalten bleibt.

Bei allen vorbeschriebenen Ausführungsbeispielen erfolgt die Herstellung des Kolbens 1 in groben Zügen folgendermaßen.
Herstellen des Kolbenschaftes 2 mit Kolbenkopf 3 einschließlich des sich ergebenden Schmierbohrungsabschnitt und des Füllstücks 6 bzw. Einsatzstücks 6.1 ebenfalls mit dem zugehörigen Schmierbohrungsabschnitt.
Einsetzen oder Einpressen des Füllstücks 6 bzw. Einsatzstücks 6.1 in den Hohlraum 4 des Kolbenschaftes 2.
Einrollen der Einrollung 9.
Ablängen des Kolbens 1 in der Trennebene E.
Ggfs. Anbringen der kegelstumpfförmigen Stirnfläche.
Überarbeiten (Drehen, Schleifen) der Mantelfläche des Kolbenschaftes 2 und ggfs. der Stirnfläche an dessen freien Ende sowie des Kolbenkopfes 2.

Bei den Ausführungsbeispielen nach Fig. 2 weist das Füllstück 6.1 aufgrund der vorhandenen Aussparung bzw. aufgrund seiner Kürze ein gegenüber einem gleichen Füllstück aus Vollmaterial verringertes Gewicht auf. Deshalb braucht ein solches ausgespartes Füllstück 6.1 nicht aus einem Leichtmaterial wie z.B. Aluminium oder Kunststoff bestehen, sondern es kann auch von gleichem Material sein wie der Kolbenschaft 2.

## Patentansprüche

1. Kolben (1) für Axialkolbenmaschinen, der als Hohlkörper mit einem axialen Hohlraum (4) ausgebildet ist, in den ein Einsatzstück (6) eingesetzt und mittels eines dessen äußere Stirnfläche übergreifenden Umschlags (8) der das Einsatzstück (6) umgebenden Wand (11) des Hohlkörpers axial gesichert ist,
dadurch gekennzeichnet, daß der Umschlag (8) des Hohlkörpers in mehrere einander gegenüberliegende Ausnehmungen oder in eine Ring-Ausnehmung (12) des Einsatzstücks (6) eingepresst ist, daß die Ausnehmungen oder Ausnehmung (12) im axialen Längsschnitt des Kolbens (1) konkav gerundet und stirnseitig offen sind bzw. ist, und daß der Umschlag (8) einen entsprechend konkav gerundeten Wandverlauf hat.

2. Kolben nach Anspruch 1, dadurch gekennzeichnet, daS die Ausnehmungen oder die Ring-Ausnehmung (12) vorgefertigt oder mit der Wand (11) eingepreßt ist.

3. Kolben nach Anspruch 1 oder 2, dadurch gekennzeichnet, daß die Einpressung in die Ausnehmungen oder Ring-Ausnehmung (12) eine Einrollung ist.

4. Kolben nach einem der vorherigen Ansprüche,
dadurch gekennzeichnet,
daß der Umschlag (8) - im axialen Querschnitt des Kolbens (1) gesehen - einen konkav gerundeten Wandverlauf aufweist.

5. Kolben nach einem der Ansprüche 1 bis 4, dadurch gekennzeichnet, daß die abgelängte Stirnfläche (7) des Kolbens (1) konvex geformt, insbesondere kegelstumpfförmig ist.

6. Kolben nach Anspruch 5, dadurch gekennzeichnet, daß der Zentralbereich der Stirnfläche (7) im Bereich der dem Hohlkörper abgewandten Hälfte der Einpressung oder Einrollung liegt und der Rand der Stirnfläche (7) etwa in der dem Hohlkörper zugewandten Kante (19) der Einpressung bzw. Einrollung oder in einem äußeren Abstand (c) davon ausläuft.

7. Kolben nach einem der Ansprüche 1 bis 5, dadurch gekennzeichnet, daß das Einsatzstück (6) den Hohlraum (4) im wesentlichen ausfüllt und aus einem Material mit einem im Vergleich zum Material des Hohlkörpers geringeren spezifischen Gewicht, insbesondere Aluminium oder Kunststoff besteht.

8. Kolben nach einem der Ansprüche 1 bis 7, dadurch gekennzeichnet, daß das Einsatzstück (6.1) durch ein geringer als die Länge (L) des Kolbenschaftes bzw. Hohlraums (4) bemessenes Kopfstück (22) gebildet ist, das innenseitig an einer Schulter (11.1) der Wand (11) anliegt oder einen Hals (23) aufweist, der sich bis zum Grund (5) des Hohlraums (4) erstreckt und daran abgestützt ist.

9. Kolben nach einem der Ansprüche 1 bis 8, dadurch gekennzeichnet, daß er einen axialen sich durch das Einsatzstück (6, 6.1) erstreckenden Schmierkanal (21) aufweist, der in der Oberfläche des Kopfes (3) des Kolbens (1) austritt.

10. Kolben nach Anspruch 8 oder 9, dadurch gekennzeichnet, daß der Hals (23) mit einem verjüngten Abschnitt (26) in den Grund (5) des Hohlraums (4) einfaßt und mit einer Schulter (27) am Grund (5) anliegt.

11. Kolben nach Anspruch 9 oder 10, dadurch gekennzeichnet, daß im Bereich der Einpressung der Schmierkanal (21) Im Querschnitt so groß bemessen ist, daß die verbleibende Wand (29) beim Einpressen einbiegt.

12. Kolben nach einem der Ansprüche 8 bis 11,
dadurch gekennzeichnet,
daß das Einsatzstück (6.1) aus einem Material besteht, das dem des Kolbenschaftes (2) entspricht.

## Claims

1. A piston (1) for axial piston machines in the form of a hollow body with an axial cavity (4) therein into which an insert (6) is inserted and is secured axially by means of a collar (8) in the wall (11) of the hollow body surrounding the insert overlapping its outer end face, characterized in that the collar (8) of the hollow body is pressed into a plurality of oppositely disposed recesses or into an annular recess (12) of the insert (6), in that, in axial longitudinal section of the piston (1), the recesses or recess (12) are or is concavely rounded and open at the end, and in that the collar (8) has a correspondingly concavely rounded wall configuration.

2. A piston according to claim 1, characterised in that the recesses or the annular recess (12) is preformed or pressed-in with the wall (11).

3. A piston according to claim 1 or 2, characterised in that the pressing-in, into the recesses or annular recess (12), is effected by rolling.

4. A piston according to any one of the preceding claims, characterised in that the collar (8) - seen in axial cross-section of the piston (8) - has a concavely rounded wall configuration.

5. A piston according to any one of claims 1 to 4, characterised in that the cut-to-length end face (7) of the piston (1) is convex, in particular in the form of a truncated cone.

6. A piston according to claim 5, characterised in that the central region of the end face (7) is located in the region of the half of the pressed-in or rolled-in region remote from the hollow body, and the edge of the end face (7) runs out substantially in the edge (19) of the pressed-in or rolled-in region facing the hollow body or at a distance (c) outwards therefrom.

7. A piston according to any one of claims 1 to 5, characterised in that the insert (6) substantially fills the cavity (4) and consists of a material such as aluminium or plastics material which has a lower specific gravity than the material of the hollow body.

8. A piston according to any one of claims 1 to 7, characterised in that the insert (6.1) is formed by a head section (22) that is shorter than the length (L) of the piston shaft or cavity, and bears internally against a shoulder (11.1) of the wall (11), or has a neck (23) which extends to and bears against the bottom (5) of the cavity (4).

9. A piston according to any one of claims 1 to 8, characterised in that it has an axial lubricating passage (21) extending through the insert (6, 6.1) and issuing from the surface of the head (3) of the piston (1).

10. A piston according to claim 8 or 9, characterised in that the neck (23) has a part (26) of reduced cross-section that engages in the bottom (5) of the cavity (4) and a shoulder (27) that abuts against the bottom (5).

11. A piston according to claim 9 or 10, characterised in that in the region where the wall of the hollow body is pressed in the cross-section of the lubricating passage (21) is so large that the remaining wall (29) of the insert is bent inwards in the course of pressing-in.

12. A piston according to any one of claims 8 to 11, characterised in that the insert (6.1) consists of a material which corresponds to that of the piston shaft (2).

## Revendications

1. Piston (1) pour machines à piston axial, réalisé sous forme de corps creux, avec un espace creux (4) axial, dans lequel une pièce de garniture (6) est insérée et fixée axialement, au moyen d'un profilage (8), entourant sa surface frontale extérieure, de la paroi (11) entourant la pièce de garniture (6) du corps creux, caractérisé en ce que le profilage (8) du corps creux est produit par un enfoncement dans plusieurs évidements, opposés les uns par rapport aux autres, ou dans un évidement annulaire (12) de la pièce de garniture (6), en ce que les évidements ou l'évidement (12) sont arrondis de façon concave dans la coupe axiale du piston (1) et sont ouverts, respectivement est ouvert en face frontale, et en ce que le profilage (8) comporte une allure de paroi arrondie de façon concave correspondante.

2. Piston selon la revendication 1, caractérisé en ce que les évidements, ou l'évidement annulaire (12) sont préfabriqués on produits par enfoncement avec la paroi (11).

3. Piston selon la revendication 1 ou 2, caractérisé en ce que l'enfoncement dans les évidements ou l'évidement annulaire (12) est produit par roulage.

4. Piston selon l'une des revendications précédentes, caractérisé en ce que le profilage (8) présente - en observant dans la coupe axiale du piston (1) - une allure de paroi arrondie de façon concave.

5. Piston selon l'une des revendications 1 à 4, caractérisé en ce que la face frontale (7), coupée à la longueur, du piston (1) est de forme convexe, en particulier tronconique.

6. Piston selon la revendication 5, caractérisé en ce que la zone centrale de la face frontale (7) est située dans la zone de la moitié opposée au corps creux de l'enfoncement ou du roulage, et la bordure de la face frontale (7) passe à peu près dans l'arête (19) tournée vers le corps creux, de l'enfoncement, respectivement du roulage, ou passe à une distance extérieure (c) par rapport à celle-ci.

7. Piston selon l'une des revendications 1 à 5, caractérisé en ce que la pièce de garniture (6) remplit pratiquement l'espace creux (4) et est composée d'un matériau présentant un poids spécifique inférieur en comparaison du matériau du corps creux, en particulier d'aluminium ou de matière synthétique.

8. Piston selon l'une des revendications 1 à 7, caractérisé en ce que la pièce de garniture (6.1) est formée par une pièce de tête (22), d'une dimension inférieure à la longueur (L) de la jupe de piston, respectivement de l'espace creux (4), et appuyant intérieurement sur un épaulement (11.1) de la paroi (11) ou présentant un col (23), s'étendant jusqu'au fond (5) de l'espace creux (4) et y prenant appui.

9. Piston selon l'une des revendications 1 à 8, caractérisé en ce qu'il présente un canal de lubrification axial (21), s'étendant à travers la pièce de garniture (6, 6.1) et sortant dans la face supérieure de la tête (3) du piston (1).

10. Piston selon la revendication 8 ou 9, caractérisé en ce que le col (23) est enchâssé, par une section effilée (26), dans le fond (5) de l'espace creux (4) et appuie sur le fond (5) à l'aide d'un épaulement (27).

11. Piston selon la revendication 9 ou 10, caractérisé en ce que, dans la zone de l'enfoncement du canal de lubrification (21), la section transversale est de valeur telle que la paroi (29) subsistant fléchit lors de l'enfoncement.

12. Piston selon l'une des revendications 8 à 11, caractérisé en ce que la pièce de garniture (6.1) est réalisée en un matériau correspondant à celui de la jupe de piston (2).
